# EUROPEAN PATENT APPLICATION

(11) **EP 4 578 687 A1**
(43) Date of publication of application: **02.07.2025**
(21) Application number: 23857119.4
(22) Date of filing: 28.07.2023
(51) Int. Cl.: B60K 7/00, F16J 15/10, H02K 5/10

(54) **IN-WHEEL MOTOR**

(30) Priority: 24.08.2022 JP 2022133177
(71) Applicant: DENSO CORPORATION, Kariya-city, Aichi 448-8661 (JP)
(72) Inventor: ENOKIZONO, Kazuya, Kariya-city, Aichi 448-8661 (JP); HORIHATA, Harumi, Kariya-city, Aichi 448-8661 (JP); AKAMA, Sadahiro, Kariya-city, Aichi 448-8661 (JP); KAWAI, Keisuke, Kariya-city, Aichi 448-8661 (JP)
(74) Representative: TBK
(86) International application number: PCT/JP2023/027784
(87) International publication number: WO 2024/043004

(57) **Abstract**

An in-wheel motor (30, 330) includes a bracket part (70, 370), a stator (50, 350) connected to the bracket part, a rotor (40, 340) having a shaft (31, 331) and a field pole and connected to a wheel (10), a bearing (60, 360) rotatably supporting the shaft, and a rotation angle sensor (80, 380). The shaft extends to a position facing an inner circumferential surface of the bracket part in a radial direction of the shaft. The rotation angle sensor has a rotor-side sensor part (81, 381) mounted to the shaft at the position facing the inner circumferential surface of the bracket part in the radial direction, and a bracket-side sensor part (82, 382) configured to output a signal that depends on rotation angle of the rotor-side sensor part. The in-wheel motor further includes a seal cover (110, 410) that blocks a space between an opening of the bracket part and the rotor-side sensor part and the bracket-side sensor part.

## Description

### [CROSS-REFERENCE TO RELATED APPLICATIONS]

The present application is based on Japanese Patent Application No. 2022-133177, filed on August 24, 2022, the contents of which are incorporated by reference into the present application.

### [TECHNICAL FIELD]

The present disclosure relates to an in-wheel motor at least part of which is received in an inner space of a wheel; the wheel has a rim part to which a tire can be mounted and a disc part provided on a side of the rim part.

### [BACKGROUND ART]

There is disclosed, for example in Patent Document 1, an in-wheel motor in which a hub bearing for rotatably supporting a shaft of a rotor is provided to a bracket that is fixed to a vehicle body. Moreover, in the in-wheel motor, a resolver, which serves as a rotation angle sensor to detect the rotation angle of the rotor, is arranged on a radially outer side of the hub bearing.

### [PRIOR ART LITERATURE]

### [PATENT LITERATURE]

[Patent Document 1]: Japanese Patent No. JP 6194750 B2

### [SUMMARY OF THE INVENTION]

In the in-wheel motor disclosed in Patent Document 1, an oil seal is provided between an outer yoke of the rotor and the bracket to prevent water and dust from intruding into the motor. However, an external force may act on the bracket due to vibration or shock from a road surface on which the vehicle travels, causing the bracket to deform. Consequently, a gap may be formed between the bracket and the oil seal, allowing water and dust to intrude into the motor through the gap and adhere to the rotation angle sensor.

It is, therefore, a primary object of the present disclosure to provide an in-wheel motor capable of preventing water and dust from adhering to a rotation angle sensor thereof.

According to the present disclosure, there is provided an in-wheel motor applicable to a mobile object. The mobile object includes a wheel having a rim part to which a tire can be mounted and a disc part provided on a side of the rim part. The in-wheel motor has at least part thereof received in an inner space of the wheel and is configured to rotate the wheel. The inner space is surrounded by the disc part and the rim part. The in-wheel motor includes: a tubular bracket part extending in a vehicle width direction of the mobile object; a stator connected to the bracket part; a rotor having a shaft and a field pole and connected to the wheel, the shaft extending in the vehicle width direction; a bearing provided, in an axial direction of the shaft, on an outer side of the bracket part in the vehicle width direction to rotatably support the shaft; and a rotation angle sensor. Moreover, the shaft extends axially inward in the vehicle width direction to a position facing an inner circumferential surface of the bracket part in a radial direction of the shaft. The rotation angle sensor has: a rotor-side sensor part mounted to the shaft at the position facing the inner circumferential surface of the bracket part in the radial direction; and a bracket-side sensor part mounted to the inner circumferential surface of the bracket part at a position facing the rotor-side sensor part in the radial direction and configured to output a signal that depends on rotation angle of the rotor-side sensor part. The bracket part is fixed to a cover part so that an opening of the bracket part on an inner side in the vehicle width direction is closed by the cover part; the cover part is a cover part which is fixed to a chassis part of the mobile object or a cover part which constitutes a part of the chassis part. The in-wheel motor further includes a seal cover provided on an inner peripheral side of the bracket part and blocking a space between the opening of the bracket part on the inner side in the vehicle width direction and the rotor-side sensor part and the bracket-side sensor part.

As above, according to the present disclosure, the bracket part extends in the vehicle width direction and is tubular in shape. Consequently, it becomes possible to have the shaft inserted from an opening of the bracket part on the outer side in the vehicle width direction into an inner space of the bracket part. Specifically, it becomes possible to have the shaft extending axially inward in the vehicle width direction to the position facing the inner circumferential surface of the bracket part in the radial direction of the shaft.

Moreover, according to the present disclosure, the rotor-side sensor part, which extends outward in the radial direction, is mounted to the shaft at the position offset inward in the vehicle width direction from the bearing and facing the inner circumferential surface of the bracket part in the radial direction. On the other hand, the bracket-side sensor part is mounted to the inner circumferential surface of the bracket part at a position facing the rotor-side sensor part in the radial direction.

Furthermore, according to the present disclosure, the bracket part is fixed to a cover part so that the opening of the bracket part on the inner side in the vehicle width direction is closed by the cover part; the cover part is a cover part which is fixed to the chassis part of the mobile object or a cover part which constitutes a part of the chassis part. However, an external force may act on the cover part, causing a gap to be formed between the bracket part and the cover part. Consequently, water and/or dust may intrude into bracket part through the gap and adhere to the rotor-side sensor part and/or the bracket-side sensor part.

In view of the above, the in-wheel motor according to the present disclosure further includes the seal cover provided on the inner peripheral side of the bracket part and blocking the space between the opening of the bracket part on the inner side in the vehicle width direction and the rotor-side sensor part and the bracket-side sensor part. Consequently, with the seal cover, it becomes possible to prevent, when water and/or dust has intruded into the bracket part through a gap formed between the bracket part and the cover part, the water and/or dust from adhering to the rotor-side sensor part and/or the bracket-side sensor part.

### [BRIEF DESCRIPTION OF THE DRAWINGS]

The above-described object, other objects, features and beneficial advantages according to the present disclosure will become more apparent from the following detailed explanation with reference to the accompanying drawings. In the drawings:
FIG. 1 is a cross-sectional view of a wheel unit according to a first embodiment;
FIG. 2 is an enlarged view of both a hub bearing and a bracket part of the wheel unit shown in FIG. 1;
FIG. 3 is a view, from an inner side in a vehicle width direction, of the bracket part with a resolver, a cover and a seal cover removed therefrom;
FIG. 4 is a view, from the inner side in the vehicle width direction, of the bracket part with the cover removed therefrom;
FIG. 5 is an enlarged view of a bracket part and its surroundings in a wheel unit according to a second embodiment;
FIG. 6 is an enlarged view of a bracket part and its surroundings in a wheel unit according to a third embodiment;
FIG. 7 is a cross-sectional view of a wheel unit according to a fourth embodiment; and
FIG. 8 is an enlarged view of a bracket part and its surroundings in the wheel unit shown in FIG. 7.

### [EMBODIMENTS FOR CARRYING OUT THE INVENTION]

Embodiments will now be described with reference to the drawings. It should be noted that in the embodiments, functionally and/or structurally corresponding and/or associated parts will be designated by the same reference signs or by reference signs differing in the hundreds digit and higher as appropriate. Moreover, it also should be noted that for corresponding and/or associated parts in one embodiment, reference may be made to the explanation thereof in the other embodiments.

### [First Embodiment]

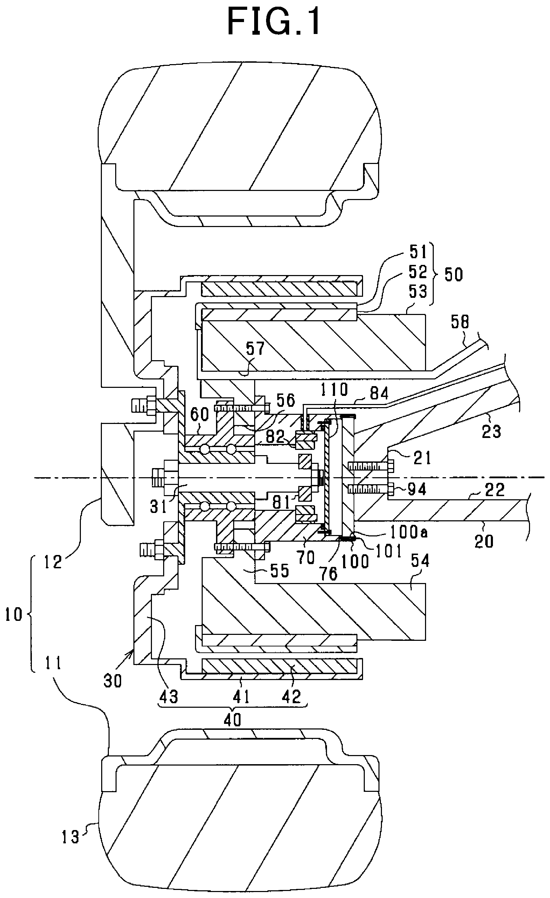

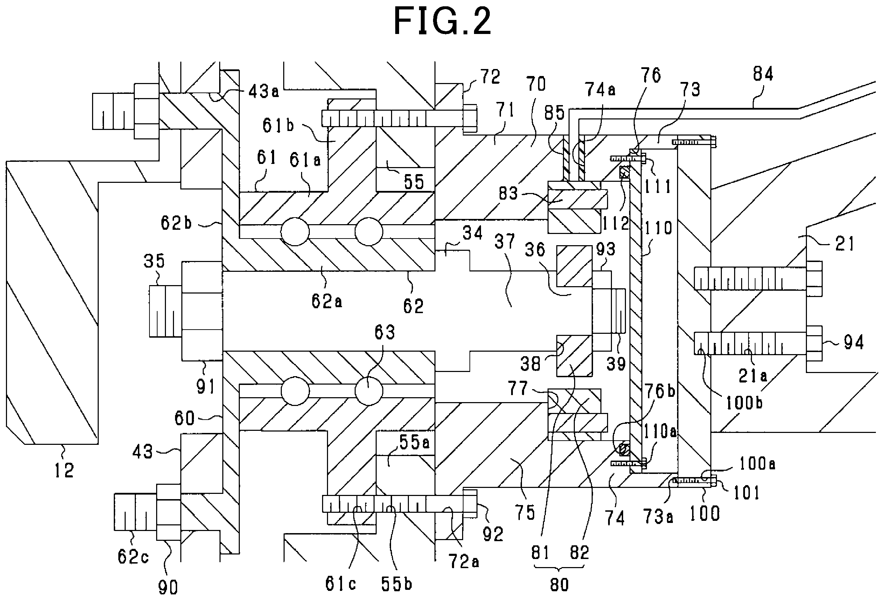

Hereinafter, a first embodiment embodying an in-wheel motor according to the present disclosure will be described with reference to FIGS. 1 and 2. The in-wheel motor constitutes, together with a wheel to which a tire is mounted, a wheel unit that serves as a driving wheel. The wheel unit according to the present embodiment is applicable to a vehicle such as an electric vehicle or a hybrid vehicle.

The wheel unit includes a wheel 10. The wheel 10 has a cylindrical rim part 11, and a disc part 12 provided at an outer end of the rim part 11 in a vehicle width direction. A tire 13 is mounted to an outer periphery of the wheel 10.

The wheel unit also includes an in-wheel motor 30 that rotates the wheel 10. The in-wheel motor 30 is mounted to a chassis part of the vehicle. More specifically, the in-wheel motor 30 is mounted to a knuckle 20 of a suspension device that constitutes the chassis part. The knuckle 20 has a mounting part 21 extending vertically, a lower arm 22 extending inward in the vehicle width direction from a lower end portion of the mounting part 21, and an upper arm 23 extending inward in the vehicle width direction from an upper end portion of the mounting part 21. The in-wheel motor 30 is mounted to the mounting part 21 of the knuckle 20. In addition, in the present embodiment, an example is given where the wheel unit is not a steered wheel; however, the wheel unit may alternatively be configured as a steered wheel.

At least part of the in-wheel motor 30 is received in an inner space of the wheel 10; the inner space is a space radially inside the rim part 11. The in-wheel motor 30 is configured to apply rotational power to the wheel 10. The in-wheel motor 30 is an outer rotor type motor which includes a shaft 31 extending in the vehicle width direction, a rotor 40, and a stator 50 that is arranged radially inside the rotor 40.

The rotor 40 includes a cylindrical magnet holder 41 and a magnet unit 42 provided on an inner circumferential surface of the magnet holder 41. The magnet holder 41 faces, over the entire range from its outer end to its inner end in the vehicle width direction, an inner circumferential surface of the rim part 11. The magnet unit 42 has a cylindrical shape coaxial with the central axis of rotation of the rotor 40, and has a plurality of magnets fixed to the inner circumferential surface of the magnet holder 41. In other words, the in-wheel motor 30 according to the present embodiment is configured as a Surface Permanent Magnet Synchronous Machine (SPMSM). In the magnet unit 42, the magnets are arranged so that their polarities are alternately different in a circumferential direction of the rotor 40. Consequently, the magnet unit 42 has a plurality of magnetic poles formed in the circumferential direction. The magnets may be implemented by, for example, polar anisotropic permanent magnets. More specifically, the magnets may be implemented by, for example, sintered neodymium magnets whose intrinsic coercive force is higher than or equal to 400[kA/m] and whose residual flux density Br is higher than or equal to 1.0[T]. It should be noted that the in-wheel motor 30 may alternatively be configured as an Interior Permanent Magnet Synchronous Machine (IPMSM).

An inner end portion of the magnet holder 41 in the vehicle width direction is bent inward in the radial direction of the rotor 40 to form a bent portion. The rotor 40 includes a discoid flat plate part 43 serving as a connection part that is provided at an outer end of the magnet holder 41 in the vehicle width direction and connects the magnet holder 41 and the shaft 31. The disc part 12 is fixed to the flat plate part 43 by bolts and nuts. Consequently, the rotor 40 and the wheel 10 can rotate together with each other. In addition, both the magnet holder 41 and the flat plate part 43 may be formed of either a nonmagnetic material (e.g., aluminum or synthetic resin) or a magnetic material (e.g., iron).

The stator 50 has a cylindrical stator coil 51 located at a position radially facing the magnet unit 42, a cylindrical stator core 52 located radially inside the stator coil 51, and a base part 52 located radially inside the stator core 52. The stator core 52 is formed of a magnetic material (more particularly, a soft-magnetic material). For example, the stator core 52 may be formed of magnetic steel sheets.

The stator coil 51 is comprised of a plurality of phase windings, and formed into a cylindrical shape by arranging the phase windings in a predetermined order in the circumferential direction. More particularly, in the present embodiment, the stator coil 51 is configured as a three-phase coil which is comprised of U-phase, V-phase and W-phase windings. Each of the phase windings is formed by winding an electrical conductor multiply. Moreover, each of the phase windings has a pair of intermediate conductor portions extending parallel to each other in an axial direction of the shaft 31 (i.e., in the vehicle width direction), and a pair of bridging portions located respectively at two axial ends of the pair of intermediate conductor portions and connecting the pair of intermediate conductor portions. That is, each of the phase windings is ring-shaped by the pair of intermediate conductor portions and the pair of bridging portions.

In the present embodiment, the stator core 52 has a slot-less structure that has no teeth for forming slots. Specifically, the slot-less structure may be one of the following structures (A) to (C).
(A) In the stator 50, inter-conductor members are provided between the intermediate conductor portions of the phase windings in the circumferential direction. The inter-conductor members are formed of a magnetic material satisfying the following relationship: Wt × Bs ≤ Wm × Br, where Wt is the circumferential width of the inter-conductor members in each magnetic pole, Bs is the saturation flux density of the inter-conductor members, Wm is the circumferential width of the magnets in each magnetic pole, and Br is the residual flux density of the magnets constituting the magnet unit 42.
(B) In the stator 50, inter-conductor members are provided between the intermediate conductor portions of the phase windings in the circumferential direction. The inter-conductor members are formed of a nonmagnetic material.
(C) In the stator 50, no inter-conductor members are provided between the intermediate conductor portions of the phase windings in the circumferential direction.

The base part 53 is configured to connect the stator 50-side configuration of the in-wheel motor 30 to the mounting part 21 of the knuckle 20. Moreover, the base part 53 is also configured to rotatably support the shaft 31.

The base part 53 functions as a housing of the stator 50. The base part 53 has a cylindrical core mounting portion 54 extending in the vehicle width direction, and an annular portion 55 extending radially inward from an outer end portion of the core mounting portion 54 in the vehicle width direction. In a central part of the annular portion 55, there is formed a through-hole 56 through which the shaft 31 is inserted. The stator core 52 is mounted to a radially outer end of the core mounting portion 54. A cavity is formed radially inside the core mounting portion 54. In the cavity, there is arranged a bracket part 70.

The bracket part 70 has a main body portion 71 having the shape of a circular tube and extending in the axial direction of the shaft 31, and an annular bracket-side flange portion 72 extending radially outward from an outer end portion of the main body portion 71 in the vehicle width direction. The bracket part 70 is formed of a nonmagnetic material, and more particularly of a nonmagnetic metal material (e.g., aluminum). In the present embodiment, the bracket part 70 is configured as a separate member from the base part 53. In the bracket-side flange portion 72, there are formed, at predetermined intervals in the circumferential direction, a plurality of bolt insertion holes 72a which each penetrate the bracket-side flange portion 72 in the axial direction and through which bolts 92 are respectively inserted.

The in-wheel motor 30 includes a hub bearing 60 that rotatably supports the shaft 31 with respect to the annular portion 55 of the base part 53. The hub bearing 60 is implemented by a rolling bearing which includes a cylindrical outer ring 61, an inner ring 62, and a plurality of rolling elements 63 (e.g., balls) interposed between the outer ring 61 and the inner ring 62.

The outer ring 61 has an outer-ring cylinder portion 61a extending in the axial direction of the shaft 31, and an annular outer-ring-side flange portion 61b extending radially outward from an axially intermediate portion of the outer-ring cylinder portion 61a.

A radially inner end portion of the annular portion 55 is formed as an annular bearing mounting portion 55a that is recessed from the outer side toward the inner side in the vehicle width direction. In the bearing mounting portion 55a, there are formed, at predetermined intervals in the circumferential direction, a plurality of bolt insertion holes 55b which each penetrate the bearing mounting portion 55a in the axial direction and through which the bolts 92 are respectively inserted. The number of the bolt insertion holes 55b is equal to the number of the bolt insertion holes 72a. Moreover, in the outer-ring-side flange portion 61b, there are formed, at predetermined intervals in the circumferential direction, a plurality of bolt insertion holes 61c which each penetrate the outer-ring-side flange portion 61b in the axial direction and through which the bolts 92 are respectively inserted. The number of the bolt insertion holes 61c is also equal to the number of the bolt insertion holes 72a. In addition, each of the bolt insertion holes 61c of the outer-ring-side flange portion 61b is a female threaded hole in which a female thread is formed.

The bracket-side flange portion 72 abuts against an inner end face of the bearing mounting portion 55a in the vehicle width direction; and the outer-ring-side flange portion 61b abuts against an outer end face of the bearing mounting portion 55a in the vehicle width direction. In this state, each of the bolts 92 is inserted, with a head portion thereof oriented inward in the vehicle width direction, through a corresponding one of the bolt insertion holes 72a, a corresponding one of the bolt insertion holes 55b and a corresponding one of the bolt insertion holes 61c; and each of the bolts 92 has its male thread screwed into the corresponding bolt insertion hole 61c that is a female threaded hole. Consequently, both the bracket part 70 and the hub bearing 60 are fixed to the annular portion 55.

The inner ring 62 of the hub bearing 60 has an inner-ring cylinder portion 62a that is cylindrical shape and has a smaller diameter than the outer ring 61, and an inner-ring-side flange portion 62b that extends from an axial end portion of the inner-ring cylinder portion 62a in a direction intersecting (more particularly, perpendicular to) the axial direction. The shaft 31 is fixed to the inner-ring cylinder portion 62a. The inner-ring-side flange portion 62b has a plurality of protrusions 62c formed at predetermined intervals in the circumferential direction and extending outward in the vehicle width direction. Each of the protrusions 62c has a male thread formed on a distal end portion thereof. On the other hand, the flat plate part 43 of the rotor 40 has through-holes 43a formed therein. With the inner-ring-side flange portion 62b abutting against an inner end face of the flat plate part 43 in the vehicle width direction and the protrusions 62c inserted in the respective through-holes 43a, nuts 90 are screwed onto the respective male threads formed on the distal end portions of the protrusions 62c. Consequently, the flat plate part 43 is fixed to the inner ring 62. Thus, the inner ring 62, the rotor 40 and the wheel 10 rotate together with each other.

At an axially intermediate portion of the shaft 31, there is formed an annular restriction portion 34 that extends radially outward. Moreover, a male thread is formed on a distal end portion 35 of the shaft 31 on the outer side in the vehicle width direction. With the restriction portion 34 abutting against an axial end face of the inner-ring cylinder portion 62a, a nut 91 is screwed onto the male thread formed on the distal end portion 35 of the shaft 31. Consequently, the shaft 31 is fixed to the inner ring 62.

A portion of the main body portion 71 of the bracket part 70, which extends for a first predetermined length in the axial direction from an opening of the main body portion 71 on the outer side in the vehicle width direction, is formed as a large-thickness portion 75. Moreover, a portion of the main body portion 71 of the bracket part 70, which extends for a second predetermined length in the axial direction from an opening of the main body portion 71 on the inner side in the vehicle width direction, is formed as a small-thickness portion 73 (corresponding to a "seal arrangement portion"). Furthermore, a portion of the main body portion 71 of the bracket part 70, which is located between the large-thickness portion 75 and the small-thickness portion 73, is formed as a medium-thickness portion 74 (corresponding to a "sensor arrangement portion"). The medium-thickness portion 74 has an inner diameter larger than that of the large-thickness portion 75; and the small-thickness portion 73 has an inner diameter larger than that of the medium-thickness portion 74. On the other hand, the outer diameters of the large-thickness portion 75, the medium-thickness portion 74 and the small-thickness portion 73 are equal to each other.

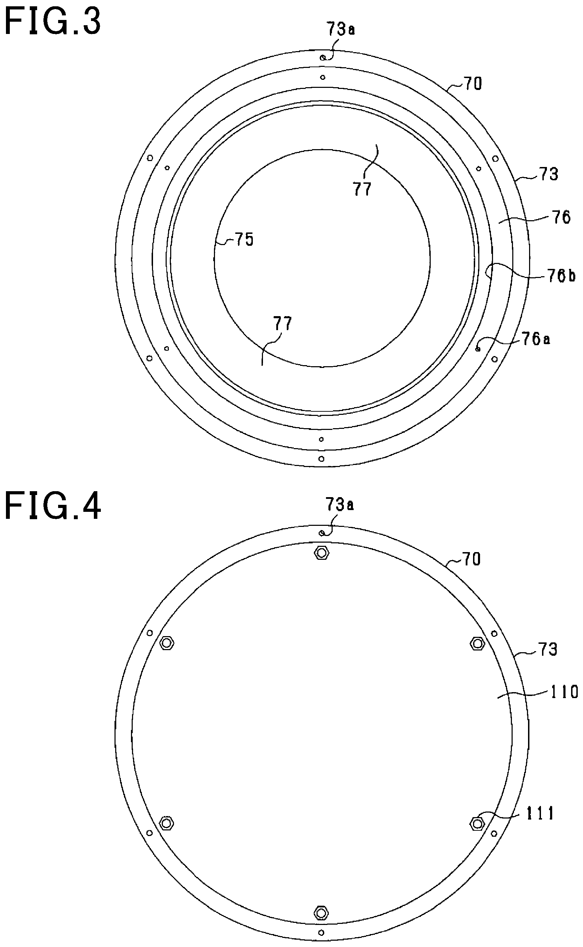

A first step portion 76 is formed at the boundary between the small-thickness portion 73 and the medium-thickness portion 74; and a second step portion 77 is formed at the boundary between the medium-thickness portion 74 and the large-thickness portion 75. As shown in FIG. 3, each of the first step portion 76 and the second step portion 77 is formed in an annular shape.

The in-wheel motor 30 also includes a resolver 80 as a rotation angle sensor for detecting the rotation angle (or electrical angle) of the rotor 40. The resolver 80 includes a resolver rotor 81 (corresponding to a "rotor-side sensor part") mounted to an inner end portion of the shaft 31 in the vehicle width direction, and a resolver stator 82 (corresponding to a "bracket-side sensor part") arranged radially outside and facing the resolver rotor 81. The resolver rotor 81 is discoid in shape and has the shaft 31 inserted therethrough so that it is coaxial with the shaft 31. The resolver stator 82 includes an annular back yoke and coils 83 wound around a plurality of teeth extending radially inward from the back yoke. The coils 83 include an excitation coil and a pair of output coils.

The excitation coil is excited by a sinusoidal excitation signal; and magnetic flux generated in the excitation coil by the excitation signal crosses the pair of output coils. At this time, the relative positional relationship between the excitation coil and the pair of output coils changes periodically according to the rotation angle of the resolver rotor 81; thus, the amount of magnetic flux crossing the pair of output coils also changes periodically according to the rotation angle of the resolver rotor 81. Consequently, signals, which depend on the rotation angle, are outputted from the pair of output coils.

In the annular portion 55 of the base part 53, there is formed a through-hole 57 that penetrates the annular portion 55 in the axial direction. A power line 58, which electrically connects the stator coil 51 to an inverter and through which three-phase alternating current flows, is inserted through the through-hole 57. A power storage unit is electrically connected with the inverter. The power storage unit may be, for example, a storage battery such as a lithium-ion battery. The switching of upper-arm and lower-arm switches of the inverter is controlled by a control device. Consequently, the rotor 40 and thus the wheel unit rotate. In addition, in the present embodiment, the inverter, the power storage unit and the control device are provided in a part (e.g., the chassis part or a body part) of the vehicle other than the wheel unit.

Next, the mounting positions of the resolver rotor 81 and the resolver stator 82 will be described.

First, the mounting position of the resolver rotor 81 will be described. An inner end portion of the shaft 31 in the vehicle width direction is formed as a small-diameter portion 36. Moreover, a portion of the shaft 31, which is adjacent to the small-diameter portion 36 in the axial direction, is formed as a large-diameter portion 37 that has a larger radial dimension than the small-diameter portion 36. Furthermore, between the small-diameter portion 36 and the large-diameter portion 37, there is formed a step portion 38 against which an axial end face of the resolver rotor 81 abuts. The step portion 38 faces an inner circumferential surface of the medium-thickness portion 74 in the radial direction. That portion of the shaft 31 which is adjacent to the large-diameter portion 37 in the axial direction constitutes the restriction portion 34. A male thread is formed on a distal end portion 39 of the small-diameter portion 36.

The small-diameter portion 36 faces the inner circumferential surface of the medium-thickness portion 74 of the bracket part 70 in the radial direction. With the small-diameter portion 36 inserted through the resolver rotor 81 and an end portion of the resolver rotor 81 abutting against the step portion 38, a nut 93 is screwed onto the male thread formed on the distal end portion 39 of the small-diameter portion 36. Consequently, the resolver rotor 81 is sandwiched between the step portion 38 and the nut 93; thus, the resolver rotor 81 is mounted to the shaft 31.

With the step portion 38 formed in the shaft 31, it becomes possible to easily position the resolver rotor 81 in the axial direction. Moreover, it also becomes possible to improve the coaxiality of the resolver rotor 81 with respect to the central axis of rotation of the shaft 31. Consequently, it becomes possible to improve the accuracy of calculating the electrical angle.

The shaft 31 extends inward in the vehicle width direction relative to the hub bearing 60. Consequently, it becomes possible to mount the resolver rotor 81 to the inner end portion of the shaft 31 in the vehicle width direction. As a result, it becomes possible to set the outer diameter of the resolver rotor 81 to be smaller than the outer diameter of the outer-ring cylinder portion 61a; more particularly, in the present embodiment, it becomes possible to set the outer diameter of the resolver rotor 81 to be smaller than the outer diameter of the inner-ring cylinder portion 62a.

Next, the mounting position of the resolver stator 82 will be described. The resolver stator 82 is mounted to the bracket part 70 with an end of the resolver stator 82 abutting against the second step portion 77 of the bracket part 70.

In that part of the medium-thickness portion 74 which radially faces the resolver stator 82, there is formed a through-hole 74a through which a wiring 84 (more particularly, a harness) is inserted; the wiring 84 is electrically connected to the coils 83. That is, the wiring 84 is led out from the inside to the outside of the bracket part 70 through the through-hole 74a. In addition, that part of the wiring 84 which is led out to the outside of the bracket part 70 extends through the space surrounded by the bracket part 70 and the base part 53 and along the direction in which the upper arm 23 extends.

A tubular seal member 85 is provided between the through-hole 74a and the wiring 84. The seal member 85 may be formed of, for example, a synthetic resin. By the seal member 85, foreign matter can be prevented from intruding into the bracket part 70 through the gap between the through-hole 74a and the wiring 84.

The aforementioned control device installed in the vehicle includes a resolver-to-digital converter. The resolver-to-digital converter supplies the excitation signal to the excitation coil, which is included in the coils 83, via the wiring 84. Moreover, the resolver-to-digital converter calculates the electrical angle by detection based on the signals outputted from the pair of output coils, which are included in the coils 83, and the excitation signal.

In the present embodiment, the bracket part 70 is formed of a nonmagnetic metal material, rather than a magnetic material such as iron. Consequently, it becomes possible to suppress leakage of magnetic flux from the resolver stator 82 to the bracket part 70, thereby improving the accuracy of calculating the electrical angle.

An opening of the main body portion 71 of the bracket part 70 formed at the inner end thereof in the vehicle width direction is covered with a cover 100 (corresponding to a "cover part"). The cover 100 is discoid in shape; and a plurality of bolt insertion holes 100a are formed, at predetermined intervals in the circumferential direction, in a peripheral portion of the cover 100. On the other hand, a plurality of female threaded holes 73a are formed, at predetermined intervals in the circumferential direction, in an inner end portion of the small-thickness portion 73 in the vehicle width direction. The number of the female threaded holes 73a is equal to the number of the bolt insertion holes 100a. With a flat surface of the peripheral portion of the cover 100 abutting against an inner end face of the small-thickness portion 73 in the vehicle width direction, bolts 101 are inserted through the respective bolt insertion holes 100a and the respective female threaded holes 73a; and male threads of the bolts 101 are screwed into the respective female threaded holes 73a. Consequently, the cover 100 is fixed to the bracket part 70.

Bolt insertion holes 21a are formed in the mounting part 21 of the knuckle 20. On the other hand, female threaded holes 100b are formed in the cover 100. With the mounting part 21 abutting against the cover 100, bolts 94 are inserted through the respective bolt insertion holes 21a and the respective female threaded holes 100b; and male threads of the bolts 94 are screwed into the respective female threaded holes 100b. Consequently, the cover 100 is fixed to the knuckle 20.

In the present embodiment, the resolver 80 is covered by the bracket part 70. Consequently, foreign matter, such as water and dust, can be prevented from intruding into the space surrounded by the bracket part 70 from the outside of the bracket part 70. However, an external force may act on the cover 100 due to vibration or shock from a road surface on which the vehicle travels, causing the cover 100 to deform. Consequently, a gap may be formed between the cover 100 and the small-thickness portion 73 of the bracket part 70, allowing water and dust to intrude into bracket part 70 through the gap and adhere to the resolver 80. As a result, corrosion and/or deterioration of the resolver 80 may occur.

In view of the above, in the present embodiment, a structure is employed with which it is difficult for water and dust to adhere to the resolver 80 even when a gap is formed between the cover 100 and the small-thickness portion 73 of the bracket part 70. Hereinafter, the structure will be described with reference to FIGS. 2 to 4. FIG. 3 is a view, from the inner side in the vehicle width direction, of the bracket part 70 with the resolver 80, the cover 100 and a seal cover 110 removed therefrom. FIG. 4 is a view, from the inner side in the vehicle width direction, of the bracket part 70 with the seal cover 110 mounted thereto and the cover 100 removed therefrom.

In the present embodiment, the in-wheel motor 30 includes the seal cover 110 that blocks the space between the opening of the bracket part 70 on the inner side in the vehicle width direction and the resolver rotor 81 and the resolver stator 82. The seal cover 110 is discoid in shape. The seal cover 110 may be formed of either a nonmagnetic material (e.g., aluminum or synthetic resin) or a magnetic material (e.g., iron).

A plurality (more particularly, six in the present embodiment) of bolt insertion holes 110a are formed, at predetermined intervals in the circumferential direction, in a peripheral portion of the seal cover 110. On the other hand, as shown in FIG. 3, a plurality of female threaded holes 76a are formed, at predetermined intervals in the circumferential direction, in the first step portion 76. The number of the female threaded holes 76a is equal to the number of the bolt insertion holes 110a. Moreover, in the first step portion 76, an annular groove 76b is formed, on the radially inner side of the female threaded holes 76a, over the entire circumferential range of the first step portion 76. In the groove 76b, there is arranged, as a sealing material, an elastic annular seal member 112. In the present embodiment, the seal member 112 is implemented by an O-ring.

With the seal member 112 pressed against the peripheral portion of the seal cover 110 and thus placed in a compressed state and with the peripheral portion of the seal cover 110 abutting against the first step portion 76, bolts 111 (corresponding to "fixing members") are inserted through the respective bolt insertion holes 110a and the respective female threaded holes 76a; and male threads of the bolts 111 are screwed into the respective female threaded holes 76a. Consequently, the seal cover 110 is fixed to the first step portion 76. As a result, it becomes possible to prevent, when water and/or dust has intruded into the bracket part 70 through a gap formed between the bracket part 70 and the cover 100, the water and/or dust from adhering to the resolver rotor 81 and the resolver stator 82.

Moreover, the radial thickness of the medium-thickness portion 74 of the bracket part 70 is greater than the radial thickness of the small-thickness portion 73 of the bracket part 70. Consequently, it becomes difficult for the first step portion 76 to be deformed; thus, it becomes difficult for a gap to be formed between the seal cover 110 and the first step portion 76. As a result, it becomes possible to reliably prevent water and dust from adhering to the resolver rotor 81 and the resolver stator 82.

Furthermore, the radial thickness of the large-thickness portion 75 of the bracket part 70 is greater than the radial thickness of the medium-thickness portion 74 of the bracket part 70. Consequently, it becomes difficult for the second step portion 77 to be deformed; thus, it becomes difficult for the coaxiality between the resolver stator 82 and the shaft 31 to be lowered. As a result, it becomes possible to improve the accuracy of detecting the electrical angle by the resolver 80.

### [Modifications of First Embodiment]

A plurality of annular grooves 76b may be formed in radial alignment with each other in the first step portion 76. In this case, in each of the grooves 76b, there may be arranged a seal member 112.

The seal member that seals between the seal cover 110 and the first step portion 76 is not limited to an O-ring, but may alternatively be, for example, an annular gasket (such as a metal gasket). In this case, the groove 76b may not be formed in the first step portion 76.

Moreover, the sealing material is not limited to a seal member, but may alternatively be, for example, a liquid gasket or an adhesive.

That portion of the main body portion 71 of the bracket part 70 which is on the inner side in the vehicle width direction with respect to the small-thickness portion 73 may be formed as a cover fitting portion that has an outer diameter equal to that of the small-thickness portion 73. The inner diameter of the cover fitting portion is larger than the inner diameter of the small-thickness portion 73; and the radial thickness of the cover fitting portion is smaller than the radial thickness of the small-thickness portion 73. In this case, in an annular step portion between the small-thickness portion 73 and the cover fitting portion, there may be formed female threaded holes 73a into which the male threads of the bolts 101 may be respectively screwed. Moreover, with a peripheral portion of the cover 100 abutting against the annular step portion between the small-thickness portion 73 and the cover fitting portion, the cover 100 may be fixed to the bracket part 70 by the bolts 101.

### [Second Embodiment]

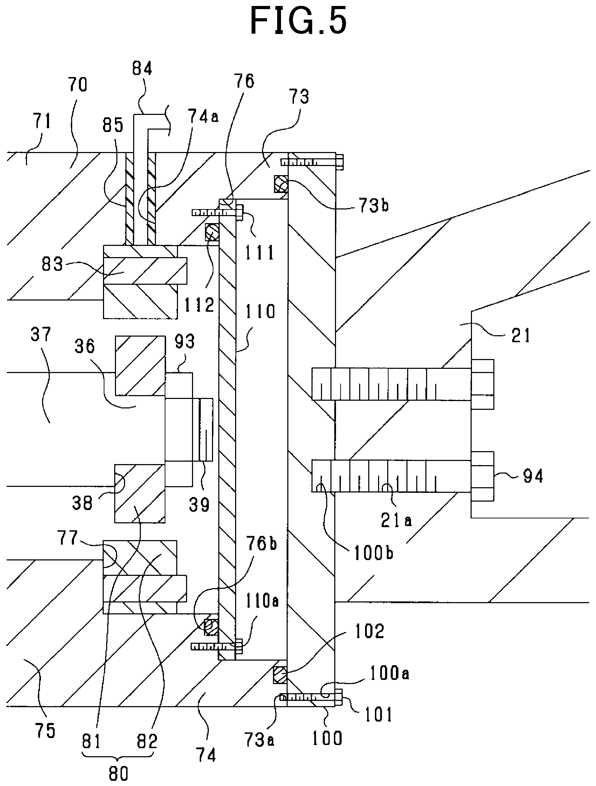

Hereinafter, a second embodiment will be described with reference to FIG. 5, focusing on the differences thereof from the first embodiment. In the present embodiment, an elastic, annular outer seal member 102 is provided between the peripheral portion of the cover 100 and the small-thickness portion 73 of the bracket part 70. In addition, in the present embodiment, the outer seal member 102 is implemented by an O-ring.

Specifically, in an inner end portion of the small-thickness portion 73 in the vehicle width direction, an annular groove 73b is formed, on the radially inner side of the female threaded holes 73a, over the entire circumferential range of the small-thickness portion 73. In the groove 76b, there is arranged, as an outer sealing material, the outer seal member 102.

With the outer seal member 102 pressed against the peripheral portion of the cover 100 and thus placed in a compressed state and with the peripheral portion of the cover 100 abutting against the annular inner end face of the small-thickness portion 73 in the vehicle width direction, the bolts 101 are inserted through the respective bolt insertion holes 100a and the respective female threaded holes 73a; and the male threads of the bolts 101 are screwed into the respective female threaded holes 73a. Consequently, the cover 100 is fixed to the bracket part 70.

According to the present embodiment described above, it becomes possible to more reliably prevent water and dust from intruding into the bracket part 70.

### [Modifications of Second embodiment]

A plurality of annular grooves 73b may be formed in radial alignment with each other in the inner end portion of the small-thickness portion 73 in the vehicle width direction. In this case, in each of the grooves 73b, there may be arranged an outer seal member 102.

The outer seal member that seals between the cover 100 and the bracket part 70 is not limited to an O-ring, but may alternatively be, for example, an annular gasket (such as a metal gasket). In this case, the groove 73b may not be formed in the inner end portion of the small-thickness portion 73 in the vehicle width direction.

Moreover, the outer sealing material is not limited to a seal member, but may alternatively be, for example, a liquid gasket or an adhesive.

### [Third Embodiment]

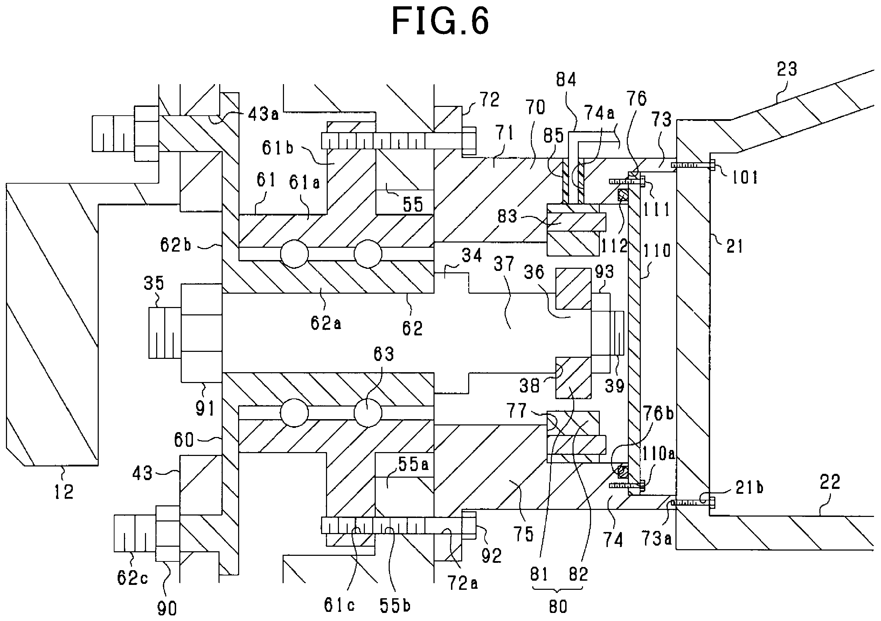

Hereinafter, a third embodiment will be described with reference to FIG. 6, focusing on the differences thereof from the first embodiment. In the present embodiment, the opening of the bracket part 70 on the inner side in the vehicle width direction is covered by, instead of the cover 100, the mounting part 21 (corresponding to a "cover part") of the knuckle 20.

In the present embodiment, in the mounting part 21 of the knuckle 20, there are formed, at predetermined intervals in the circumferential direction, a plurality of bolt insertion holes 21b the number of which is equal to the number of the female threaded holes 73a.

With the mounting part 21 abutting against the bracket part 70, bolts 101 are inserted through the respective bolt insertion holes 21b and the respective female threaded holes 73a; and male threads of the bolts 101 are screwed into the respective female threaded holes 73a. Consequently, the bracket part 70 is fixed to the knuckle 20.

According to the present embodiment described above, it becomes possible to close the opening of the bracket part 70 on the inner side in the vehicle width direction while reducing the number of parts of the in-wheel motor 30.

### [Fourth Embodiment]

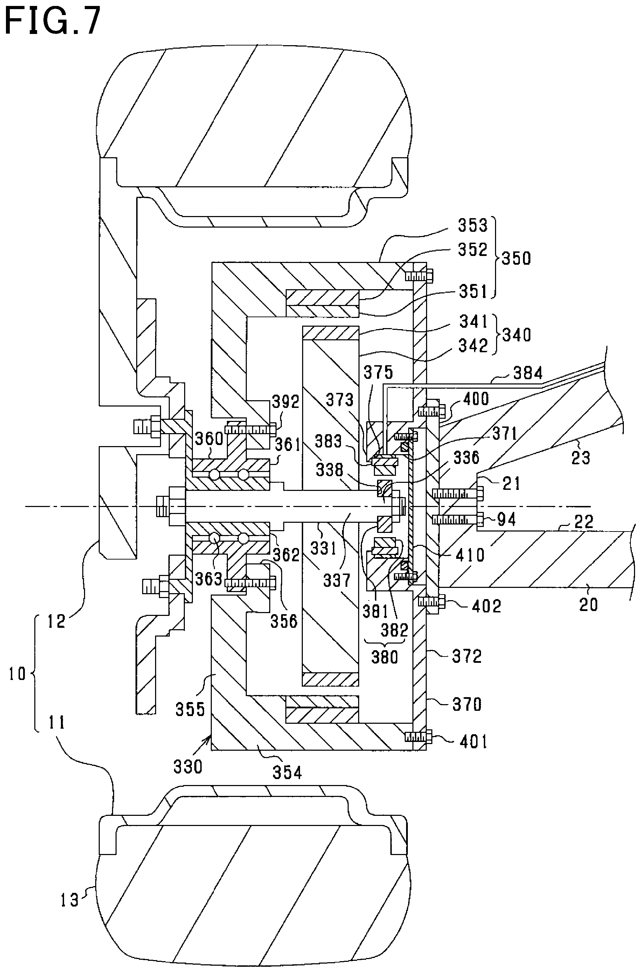

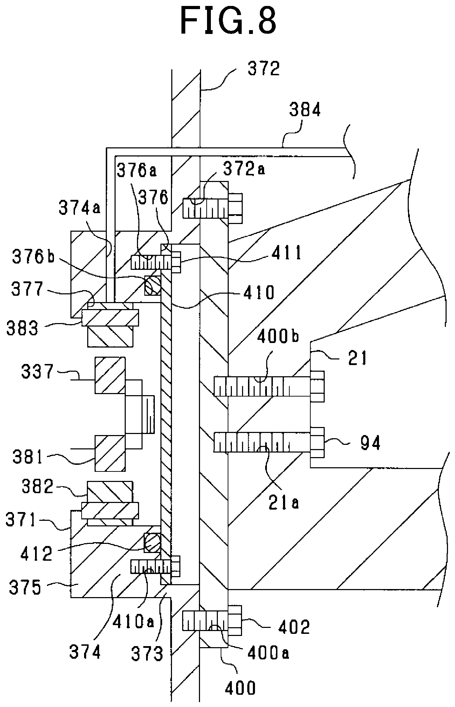

Hereinafter, a fourth embodiment will be described with reference to FIGS. 7 and 8, focusing on the differences thereof from the first embodiment. In the present embodiment, in the vehicle, there is employed an inner rotor type in-wheel motor 330, instead of the outer rotor type in-wheel motor as described in the first embodiment. It should be noted that in the present embodiment, the explanation of components similar to those in the first embodiment will be omitted as appropriate.

The in-wheel motor 330 includes a shaft 331 extending in the vehicle width direction, a rotor 340, and a stator 350 arranged radially outside the rotor 340.

The rotor 340 includes a cylindrical magnet unit 341, and a rotor core 342 provided radially inside the magnet unit 341. In addition, the in-wheel motor 330 may be configured as an interior permanent magnet synchronous machine.

The stator 350 includes a cylindrical stator coil 351 arranged at a position radially facing the magnet unit 341, a cylindrical stator core 352 provided radially outside the stator coil 351, and a base part 353. The base part 353 functions as a housing of the stator 350. The base part 353 includes a cylindrical core mounting portion 354 extending in the vehicle width direction, and an annular portion 355 extending radially inward from an outer end portion of the core mounting portion 354 in the vehicle width direction. In a central part of the annular portion 355, there is formed a through-hole 356 through which the shaft 331 is inserted. The stator core 352 is mounted to a radially inner end of the core mounting portion 354.

The in-wheel motor 330 includes a hub bearing 360 that rotatably supports the shaft 331 with respect to the annular portion 355 of the base part 353. The hub bearing 360 is implemented by a rolling bearing which includes a cylindrical outer ring 361, an inner ring 362, and a plurality of rolling elements 363 (e.g., balls) interposed between the outer ring 361 and the inner ring 362. An outer-ring-side flange portion of the outer ring 361 is fixed to the disc part 12. The shaft 331 is fixed to the inner ring 362.

The in-wheel motor 330 also includes a bracket part 370. The bracket part 370 has a main body portion 371 having the shape of a circular tube and extending in the axial direction of the shaft 331, and an annular bracket-side flange portion 372 extending radially outward from an inner end portion of the main body portion 371 in the vehicle width direction. The bracket-side flange portion 372 is fixed to the core mounting portion 354 of the base part 353 of the stator 350 by bolts 401.

A portion of the main body portion 371 of the bracket part 370, which extends for a first predetermined length in the axial direction from an opening of the main body portion 371 on the outer side in the vehicle width direction, is formed as a large-thickness portion 375. Moreover, a portion of the main body portion 371 of the bracket part 370, which extends for a second predetermined length in the axial direction from an opening of the main body portion 371 on the inner side in the vehicle width direction, is formed as a small-thickness portion 373 (corresponding to a "seal arrangement portion"). Furthermore, a portion of the main body portion 371 of the bracket part 370, which is located between the large-thickness portion 375 and the small-thickness portion 373, is formed as a medium-thickness portion 374 (corresponding to a "sensor arrangement portion"). The medium-thickness portion 374 has an inner diameter larger than that of the large-thickness portion 375; and the small-thickness portion 373 has an inner diameter larger than that of the medium-thickness portion 374.

A first step portion 376 is formed at the boundary between the small-thickness portion 373 and the medium-thickness portion 374; and a second step portion 377 is formed at the boundary between the medium-thickness portion 374 and the large-thickness portion 375. Moreover, each of the first step portion 376 and the second step portion 377 is formed in an annular shape.

A resolver stator 382 of a resolver 380 is mounted to the bracket part 370, with an end of the resolver stator 382 abutting against the second step portion 377 of the bracket part 370.

A resolver rotor 381 of the resolver 380 is mounted to an inner end portion of the shaft 331 in the vehicle width direction. In the shaft 331, there are formed a small-diameter portion 336, a large-diameter portion 337 and a step portion 338, which correspond respectively to the small-diameter portion 36, the large-diameter portion 37 and the step portion 38 in the first embodiment. The resolver rotor 381 is mounted to the shaft 331, with the small-diameter portion 336 inserted through the resolver rotor 381 and an end portion of the resolver rotor 381 abutting against the step portion 338.

In that part of the medium-thickness portion 374 which radially faces the resolver stator 82, there is formed a through-hole 374a through which a wiring 384 (more particularly, a harness) is inserted; the wiring 384 is electrically connected to coils 383 of the resolver stator 382. That is, the wiring 384 is led out from the inside to the outside of the bracket part 370 through the through-hole 374a. It should be noted that for the sake of simplicity, a tubular seal member provided between the through-hole 374a and the wiring 384 is not shown in FIGS. 7 and 8.

An opening of the main body portion 371 of the bracket part 370 on the inner side in the vehicle width direction is covered with a cover 400 (corresponding to a "cover part"). The cover 400 is discoid in shape; and a plurality of bolt insertion holes 400a are formed, at predetermined intervals in the circumferential direction, in a peripheral portion of the cover 400. On the other hand, a plurality of female threaded holes 372a are formed, at predetermined intervals in the circumferential direction, in a peripheral portion of an opening of the bracket-side flange portion 372. The number of the female threaded holes 372a is equal to the number of the bolt insertion holes 400a. With a flat surface of the peripheral portion of the cover 400 abutting against an inner end face of the bracket-side flange portion 372 in the vehicle width direction, bolts 402 are inserted through the respective bolt insertion holes 400a and the respective female threaded holes 372a; and male threads of the bolts 402 are screwed into the respective female threaded holes 372a. Consequently, the cover 400 is fixed to the bracket part 370.

Moreover, in the cover 400, there are also formed female screw holes 400b. With the mounting part 21 abutting against the cover 400, bolts 94 are inserted through the respective bolt insertion holes 21a and the respective female threaded holes 400b; and male threads of the bolts 94 are screwed into the respective female threaded holes 400b. Consequently, the cover 400 is fixed to the knuckle 20.

The in-wheel motor 330 also includes a seal cover 410 that blocks the space between the opening of the bracket part 370 on the inner side in the vehicle width direction and the resolver rotor 381 and the resolver stator 382. The seal cover 410 is discoid in shape. The seal cover 410 may be formed of either a nonmagnetic material (e.g., aluminum or synthetic resin) or a magnetic material (e.g., iron).

A plurality of bolt insertion holes 410a are formed, at predetermined intervals in the circumferential direction, in a peripheral portion of the seal cover 410. On the other hand, a plurality of female threaded holes 376a are formed, at predetermined intervals in the circumferential direction, in the first step portion 376. The number of the female threaded holes 376a is equal to the number of the bolt insertion holes 410a. Moreover, in the first step portion 376, an annular groove 376b is formed, on the radially inner side of the female threaded holes 376a, over the entire circumferential range of the first step portion 376. In the groove 376b, there is arranged, as a sealing material, an elastic annular seal member 412. In the present embodiment, the seal member 412 is implemented by an O-ring.

With the seal member 412 pressed against the peripheral portion of the seal cover 410 and thus placed in a compressed state and with the peripheral portion of the seal cover 410 abutting against the first step portion 376, bolts 411 (corresponding to "fixing members") are inserted through the respective bolt insertion holes 410a and the respective female threaded holes 376a; and male threads of the bolts 411 are screwed into the respective female threaded holes 376a. Consequently, the seal cover 410 is fixed to the first step portion 376. As a result, as in the first embodiment, it becomes possible to prevent, when water and/or dust has intruded into the bracket part 370 through a gap formed between the bracket part 370 and the cover 400, the water and/or dust from adhering to the resolver rotor 381 and the resolver stator 382.

### [Other Embodiments]

The above-described embodiments may be modified and implemented as follows.

In the fourth embodiment, an outer sealing material may be provided between the cover 400 and the bracket part 370, as in the second embodiment.

The inner ring of the hub bearing and the shaft may be integrally formed into a single part.

The bracket part and the base part of the stator may be integrally formed into a single part.

The position where the wiring 84 is led out is not limited to the position shown in FIG. 2. For example, the wiring 84 may alternatively be led out from the inside to the outside of the bracket part 70 through a through-hole formed between the bracket part 70 and the cover 100. Moreover, the through-hole is not limited to being formed in an inner end portion of the bracket part 70 in the vehicle width direction, but may alternatively be formed in the cover 100.

Alternatively, the wiring 84 may be led out from the inside to the outside of the bracket part 70 through a through-hole formed between the bracket-side flange portion 72 of the bracket part 70 and the annular portion 55 of the stator 50.

The shape of the bracket part is not limited to a circular tube, but may alternatively be a tube having a quadrangular shape (e.g., a square or rectangular shape). Moreover, the bracket part may be formed of a magnetic material (e.g., iron).

In the first to third embodiments, instead of the configuration in which the flat plate part 43 of the in-wheel motor 30 is fixed to the disc part 12 of the wheel 10, a configuration may be employed in which the magnet holder 41 of the in-wheel motor 30 is fixed to the rim part 11.

In the first to third embodiments, the rim part 11 of the wheel 10 may serve as the magnet holder of the in-wheel motor 30; and the disc part 12 may serve as the flat plate part. In other words, the rotor 40 of the in-wheel motor 30 may serve as the wheel.

In the configuration shown in FIG. 1, a bearing may be mounted to the inner circumferential surface of the bracket part 70 to rotatably support an inner end portion of the shaft 31 in the vehicle width direction. In this case, the bearing may be provided, for example, closer than the resolver 80 to the cover 100 in the axial direction.

The bracket part may alternatively be formed of a magnetic metal material (e.g., iron that is a soft-magnetic material).

The rotation angle sensor is not limited to a resolver. For example, the rotation angle sensor may alternatively be a magnetic encoder that has a magnet unit, which includes permanent magnets, serving as the rotor-side sensor part and a magnetic sensor, which includes Hall elements, serving as the bracket-side sensor part.

The inverter may alternatively be built in the in-wheel motor.

The rotating electric machine is not limited to the radial gap type rotating electric machines as described in the first to fourth embodiments, but may alternatively be an axial gap type rotating electric machine.

The rotating electric machine is not limited to permanent magnet synchronous machines, but may alternatively be a wound-field synchronous machine having a field coil provided in a rotor or a stator. Moreover, the rotating electric machine is not limited to synchronous machines, but may alternatively be, for example, an induction machine.

The wheeled mobile object in which the in-wheel motor is installed may be an unmanned guided vehicle or a forklift. Further, the unmanned guided vehicle may be, for example, an Automatic Guided Vehicle (AGV) or an Autonomous Mobile Robot (AMR) which are used in factories.

Furthermore, the wheeled mobile object in which the in-wheel motor is installed may be a small-sized electric vehicle for riding, such as an electric wheelchair or a mobility scooter. A small-sized electric vehicle is an electric vehicle which travels at a speed of, for example, 10 km/h or lower.

Hereinafter, characteristic configurations extracted from the above-described embodiments will be described.

### [First Configuration]

An in-wheel motor (30, 330) applicable to a mobile object,
the mobile object comprising a wheel (10) having a rim part (11) to which a tire (13) can be mounted and a disc part (12) provided on a side of the rim part,
the in-wheel motor having at least part thereof received in an inner space of the wheel and being configured to rotate the wheel, the inner space being surrounded by the disc part and the rim part,
the in-wheel motor comprising:
   a tubular bracket part (70, 370) extending in a vehicle width direction of the mobile object;
   a stator (50, 350) connected to the bracket part;
   a rotor (40, 340) having a shaft (31, 331) and a field pole and connected to the wheel, the shaft extending in the vehicle width direction;
   a bearing (60, 360) provided, in an axial direction of the shaft, on an outer side of the bracket part in the vehicle width direction to rotatably support the shaft; and
   a rotation angle sensor (80, 380),
   wherein
   the shaft extends axially inward in the vehicle width direction to a position facing an inner circumferential surface of the bracket part in a radial direction of the shaft,
   the rotation angle sensor has:
      a rotor-side sensor part (81, 381) mounted to the shaft at the position facing the inner circumferential surface of the bracket part in the radial direction; and
      a bracket-side sensor part (82, 382) mounted to the inner circumferential surface of the bracket part at a position facing the rotor-side sensor part in the radial direction and configured to output a signal that depends on rotation angle of the rotor-side sensor part,
      the bracket part is fixed to a cover part so that an opening of the bracket part on an inner side in the vehicle width direction is closed by the cover part, the cover part being a cover part (100, 400) which is fixed to a chassis part (20) of the mobile object or a cover part (21) which constitutes a part of the chassis part, and
      the in-wheel motor further comprises a seal cover (110, 410) provided on an inner peripheral side of the bracket part and blocking a space between the opening of the bracket part on the inner side in the vehicle width direction and the rotor-side sensor part and the bracket-side sensor part.

### [Second Configuration]

The in-wheel motor according to the first configuration, wherein
in the bracket part, there are formed a sensor arrangement portion (74, 374) to which the bracket-side sensor part is arranged and a seal arrangement portion (73, 373) that is located adjacent to and on the inner side of the sensor arrangement portion in the vehicle width direction and has a larger inner diameter than the sensor arrangement portion, and
the seal cover is fixed to the bracket part, with a peripheral portion of the seal cover abutting against an annular step portion (76, 376) formed between the sensor arrangement portion and the seal arrangement portion in the bracket part.

### [Third Configuration]

The in-wheel motor according to the second configuration, wherein
a radial thickness of the sensor arrangement portion of the bracket part is larger than a radial thickness of the seal arrangement portion of the bracket part.

### [Fourth Configuration]

The in-wheel motor according to the second or third configuration, wherein
a sealing material (112, 412) is provided between the seal cover and the bracket part.

### [Fifth Configuration]

The in-wheel motor according to the fourth configuration, wherein
in the step portion, there is formed an annular groove (76b, 376b) that extends in a circumferential direction,
the in-wheel motor further comprises an annular seal member (112, 412) as the sealing material, and
the seal member is arranged in the groove.

### [Sixth Configuration]

The in-wheel motor according to the fifth configuration, further comprising a fixing member (111, 411) that fixes the peripheral portion of the seal cover to a part of the step portion which is located on a radially outer side of the groove.

### [Seventh Configuration]

The in-wheel motor according to any one of the first to sixth configurations, wherein
an outer sealing material (102) is provided between an inner end portion of the bracket part in the vehicle width direction and the cover part.

### [Eighth Configuration]

The in-wheel motor according to any one of the first to seventh configurations, wherein
the rotation angle sensor is a resolver which includes:
a resolver rotor as the rotor-side sensor part; and
an excitation coil and a resolver stator (82, 382), around which the excitation coil is wound, as the bracket-side sensor part.

### [Ninth Configuration]

The in-wheel motor according to the eighth configuration, wherein
the bracket part is formed of a nonmagnetic material.

While the present disclosure has been described pursuant to the above embodiments, it should be appreciated that the present disclosure is not limited to the embodiments and the structures. Instead, the present disclosure encompasses various modifications and changes within equivalent ranges. In addition, various combinations and modes are also included in the category and the scope of technical idea of the present disclosure.

## Claims

1. An in-wheel motor (30, 330) applicable to a mobile object,
the mobile object comprising a wheel (10) having a rim part (11) to which a tire (13) can be mounted and a disc part (12) provided on a side of the rim part,
the in-wheel motor having at least part thereof received in an inner space of the wheel and being configured to rotate the wheel, the inner space being surrounded by the disc part and the rim part,
the in-wheel motor comprising:
a tubular bracket part (70, 370) extending in a vehicle width direction of the mobile object;
a stator (50, 350) connected to the bracket part;
a rotor (40, 340) having a shaft (31, 331) and a field pole and connected to the wheel, the shaft extending in the vehicle width direction;
a bearing (60, 360) provided, in an axial direction of the shaft, on an outer side of the bracket part in the vehicle width direction to rotatably support the shaft; and
a rotation angle sensor (80, 380),
wherein
the shaft extends axially inward in the vehicle width direction to a position facing an inner circumferential surface of the bracket part in a radial direction of the shaft,
the rotation angle sensor has:
a rotor-side sensor part (81, 381) mounted to the shaft at the position facing the inner circumferential surface of the bracket part in the radial direction; and
a bracket-side sensor part (82, 382) mounted to the inner circumferential surface of the bracket part at a position facing the rotor-side sensor part in the radial direction and configured to output a signal that depends on rotation angle of the rotor-side sensor part,
the bracket part is fixed to a cover part so that an opening of the bracket part on an inner side in the vehicle width direction is closed by the cover part, the cover part being a cover part (100, 400) which is fixed to a chassis part (20) of the mobile object or a cover part (21) which constitutes a part of the chassis part, and
the in-wheel motor further comprises a seal cover (110, 410) provided on an inner peripheral side of the bracket part and blocking a space between the opening of the bracket part on the inner side in the vehicle width direction and the rotor-side sensor part and the bracket-side sensor part.

2. The in-wheel motor as set forth in Claim 1, wherein
in the bracket part, there are formed a sensor arrangement portion (74, 374) to which the bracket-side sensor part is arranged and a seal arrangement portion (73, 373) that is located adjacent to and on the inner side of the sensor arrangement portion in the vehicle width direction and has a larger inner diameter than the sensor arrangement portion, and
the seal cover is fixed to the bracket part, with a peripheral portion of the seal cover abutting against an annular step portion (76, 376) formed between the sensor arrangement portion and the seal arrangement portion in the bracket part.

3. The in-wheel motor as set forth in Claim 2, wherein
a radial thickness of the sensor arrangement portion of the bracket part is larger than a radial thickness of the seal arrangement portion of the bracket part.

4. The in-wheel motor as set forth in Claim 2 or 3, wherein
a sealing material (112, 412) is provided between the seal cover and the bracket part.

5. The in-wheel motor as set forth in Claim 4, wherein
in the step portion, there is formed an annular groove (76b, 376b) that extends in a circumferential direction,
the in-wheel motor further comprises an annular seal member (112, 412) as the sealing material, and
the seal member is arranged in the groove.

6. The in-wheel motor as set forth in Claim 5, further comprising a fixing member (111, 411) that fixes the peripheral portion of the seal cover to a part of the step portion which is located on a radially outer side of the groove.

7. The in-wheel motor as set forth in any one of Claims 1 to 3, wherein
an outer sealing material (102) is provided between an inner end portion of the bracket part in the vehicle width direction and the cover part.

8. The in-wheel motor as set forth in any one of Claims 1 to 3, wherein
the rotation angle sensor is a resolver which includes:
a resolver rotor as the rotor-side sensor part; and
an excitation coil and a resolver stator (82, 382), around which the excitation coil is wound, as the bracket-side sensor part.

9. The in-wheel motor as set forth in Claim 8, wherein
the bracket part is formed of a nonmagnetic material.
